# EUROPEAN PATENT APPLICATION

(11) **EP 4 742 374 A1**
(43) Date of publication of application: **13.05.2026**
(21) Application number: 24212359.4
(22) Date of filing: 12.11.2024
(51) Int. Cl.: H01M 10/6552, H01M 10/6554, H01M 10/6556, H01M 10/647

(54) **A BATTERY CELL STACK ASSEMBLY, A BATTERY PACK AND A VEHICLE**

(71) Applicant: Volvo Truck Corporation, 405 08 Göteborg (SE)
(72) Inventor: Jonsson, Kasper, 417 57 Göteborg (SE); Nicklasson, Kristian, 439 55 Åsa (SE); Irannezhad, Mike, 413 30 Göteborg (SE); Rout, Dhirendra, 422 54 Göteborg (SE)
(74) Representative: Kransell & Wennborg KB

(57) **Abstract**

The disclosure relates to a battery cell stack assembly (1), comprising:
- at least one battery cell stack (21-24),
- a cooling plate member (4) for cooling the at least one battery cell stack (21-24), and wherein the at least one battery cell stack (21-24) comprises at least one vapor chamber (5) configured to transfer heat between a plurality of prismatic battery cells (3) of the battery cell stack (21-24) and the cooling plate member (4). The disclosure also relates to a battery pack (100) and a vehicle (200).

## Description

### TECHNICAL FIELD

The disclosure relates generally to energy storage systems. In particular aspects, the disclosure relates to a battery cell stack assembly, a battery pack and a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

A battery pack typically comprises a plurality of battery cells, i.e., electrochemical battery cells, which are electrically connected in series and/or in parallel. The battery pack may comprise one or more separate battery cell stacks. The battery cells may be prismatic battery cells.

Due to the electrification trend, such as for vehicles, there is an ongoing strive to develop improved technology relating to battery packs, such as to provide cost-effective configurations which are reliable, robust and/or space efficient, and which also provide efficient cooling of the battery cells.

### SUMMARY

According to a first aspect of the disclosure, a battery cell stack assembly is provided. The battery cell stack comprises:
- at least one battery cell stack comprising a plurality of prismatic battery cells stacked together, the respective prismatic battery cell being formed by a top surface comprising at least one electrical terminal, a bottom surface, and four side surfaces connecting the top surface to the bottom surface, wherein the plurality of prismatic battery cells are stacked together along a cell stack longitudinal direction such that the top surfaces of the plurality of prismatic battery cells are directed in a common direction which is perpendicular to the cell stack longitudinal direction,
- a cooling plate member for cooling the at least one battery cell stack,
wherein
the at least one battery cell stack further comprises at least one vapor chamber configured to transfer heat between the plurality of prismatic battery cells and the cooling plate member, the at least one vapor chamber comprises a first heat conductive portion which extends in the cell stack longitudinal direction over adjacently arranged side surfaces of the plurality of prismatic battery cells and a second heat conductive portion which extends in the cell stack longitudinal direction over adjacently arranged bottom surfaces of the plurality of prismatic battery cells,
the cooling plate member extends in the cell stack longitudinal direction and is provided at the adjacently arranged bottom surfaces of the plurality of prismatic battery cells, and the second heat conductive portion is provided in-between the cooling plate member and the adjacently arranged bottom surfaces of the plurality of prismatic battery cells such that heat can be transferred between the second heat conductive portion and the cooling plate member. The first aspect of the disclosure may seek to provide a battery cell stack assembly which improves cooling of the prismatic battery cells of the battery cell stack while also resulting in a compact, robust and/or reliable configuration. A technical benefit may include that heat may be efficiently transferred between the prismatic battery cells and the cooling plate member. By way of example, by the battery cell stack assembly as disclosed herein, fewer cooling plate members may be required for achieving efficient cooling, and/or a more compact configuration may be achieved in that adjacent battery cell stacks may be located closer to each other.

Optionally in some examples, including in at least one preferred example, the first heat conductive portion is a plate element which extends in the cell stack longitudinal direction over the adjacently arranged side surfaces of the plurality of prismatic battery cells. A technical benefit may include that a more compact configuration is achieved, while still achieving an appropriate cooling of the prismatic battery cells.

Optionally in some examples, including in at least one preferred example, the second heat conductive portion is a plate element which extends in the cell stack longitudinal direction over the adjacently arranged bottom surfaces of the plurality of prismatic battery cells. A technical benefit may include that a more compact configuration is achieved, while still achieving an appropriate cooling of the prismatic battery cells.

Optionally in some examples, including in at least one preferred example, the first heat conductive portion is configured to transfer heat from the respective adjacently arranged side surfaces towards the second heat conductive portion in a direction along the respective side surface which is perpendicular to the cell stack longitudinal direction.

Optionally in some examples, including in at least one preferred example, the first and second heat conductive portions comprise a common chamber with a fluid, wherein the at least one vapor chamber is arranged to transfer heat between the plurality of prismatic battery cells of the at least one battery cell stack and the cooling plate member by phase transition of the fluid. A technical benefit may include that heat transfer may be repeatedly and efficiently carried out by phase transition of the fluid.

Optionally in some examples, including in at least one preferred example, the cooling plate member comprises a coolant path, and a coolant inlet and a coolant outlet fluidly connected to the coolant path. A technical benefit may include that heat may be transferred in a coolant along the coolant path to/from the coolant inlet/outlet.

Optionally in some examples, including in at least one preferred example, the at least one vapor chamber is fluidly separated from the coolant path of the cooling plate member. Accordingly, by way of example, the common chamber of the first and second heat conductive portions may be fluidly separated from the coolant path of the cooling plate member. A technical benefit may include that fewer fluid connections are required, thereby reducing a risk of leakage in fluid connections.

Optionally in some examples, including in at least one preferred example, the plurality of prismatic battery cells are attached to each other by at least one strap which is wrapped around the plurality of prismatic battery cells, wherein the at least one vapor chamber is attached to the plurality of prismatic battery cells by the at least one strap. By way of example, the at least one vapor chamber may be attached to the plurality of prismatic battery cells in that the at least one strap is also wrapped around the at least one vapor chamber. A technical benefit may include that a reliable and compact battery cell stack configuration is achieved in a cost-effective manner.

Optionally in some examples, including in at least one preferred example, the at least one battery cell stack comprises a first vapor chamber and a second vapor chamber of the at least one vapor chamber, wherein the first heat conductive portion of the first vapor chamber is provided on a first cell stack side of the at least one battery cell stack and the first heat conductive portion of the second vapor chamber is provided on a second cell stack side of the at least one battery cell stack, wherein the second cell stack side is an opposite side to the first cell stack side. A technical benefit may include that heat may be transferred between more than one side surface and the bottom surface of the respective prismatic battery cells. This may result in improved cooling of the prismatic battery cells.

Optionally in some examples, including in at least one preferred example, the battery cell stack assembly comprises a first battery cell stack and a second battery cell stack of the at least one battery cell stack, wherein the adjacently arranged bottom surfaces of the plurality of prismatic battery cells of the first battery cell stack are provided on a first side of the cooling plate member and the adjacently arranged bottom surfaces of the plurality of prismatic battery cells of the second battery cell stack are provided on a second side of the cooling plate member, wherein the second side is an opposite side to the first side. A technical benefit may include that both sides of the cooling plate member are used for transferring heat to/from the first and second battery cell stacks. This may e.g. result in a more compact configuration.

According to a second aspect of the disclosure, a battery pack is provided. The battery pack has a longitudinal extension in a longitudinal direction, a width extension in a width direction and a height extension in a height direction. The battery pack comprises a battery cell stack assembly according to any example of the first aspect of the disclosure. The second aspect of the disclosure may seek to provide a battery pack which improves cooling of the prismatic battery cells of the battery cell stack(s) while also ensuring a compact, robust and/or reliable configuration. Advantages and technical benefits of the second aspect of the disclosure are analogous to the advantages and technical benefits of the first aspect of the disclosure.

Optionally in some examples, including in at least one preferred example, the cooling plate member is a bottom support member of the battery pack with an extension in the longitudinal direction and the width direction, wherein the bottom support member is a load-bearing support member for the at least one battery cell stack. A technical benefit may include that the cooling plate member is also acting as a structural member for accommodating the load from the at least one battery cell stack.

Optionally in some examples, including in at least one preferred example, the cooling plate member is an intermediate support member of the battery pack with an extension in the longitudinal direction and the height direction. A technical benefit may include that the cooling plate member is also acting as a separation member for separating battery cell stacks, and/or arranged for cooling battery cell stacks on opposite sides of the cooling plate member.

Optionally in some examples, including in at least one preferred example, the cell stack longitudinal direction of the at least one battery cell stack corresponds to the longitudinal direction of the battery pack. A technical benefit may include that an appropriate packaging of the at least one battery cell stack in the battery pack is achieved, e.g., resulting in a compact packaging of the at least one battery cell stack.

Optionally in some examples, including in at least one preferred example, the common direction extends along the width direction of the battery pack. A technical benefit may include that a compact configuration is achieved, e.g., allowing several layers of battery cell stacks to be provided on top of each other in the height direction in a compact configuration.

Optionally in some examples, including in at least one preferred example, the common direction extends along the height direction of the battery pack. A technical benefit may include that a compact configuration is achieved in the width direction.

Optionally in some examples, including in at least one preferred example, the battery pack further comprises a plurality of separate accommodation spaces respectively arranged to receive one or more battery cell stacks of the battery cell stack assembly. A technical benefit may include that the battery cell stacks are well protected and reliably located in the battery pack, e.g., resulting in a more robust configuration.

Optionally in some examples, including in at least one preferred example, the battery pack further comprises one or more crossbeam members with an extension in the width direction, wherein the plurality of separate accommodation spaces is at least partly defined by the one or more crossbeam members. A technical benefit may include that improved structural rigidity is achieved, e.g., resulting in improved crash protection.

Optionally in some examples, including in at least one preferred example, the plurality of accommodation spaces is arranged such that at least two rows of battery cell stacks are arranged in parallel along the longitudinal direction. A technical benefit may include that a compact configuration is achieved which also has high energy density.

According to a third aspect of the disclosure, a vehicle is provided. The vehicle comprises a battery pack according to any example of the second aspect of the disclosure. Advantages and technical benefits of the third aspect of the disclosure are analogous to the advantages and technical benefits of the first and second aspects of the disclosure.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary vehicle in a side view according to an example.
**FIG. 2** is an exemplary battery cell stack assembly according to an example.
**FIG. 3** is an exemplary battery cell stack assembly according to an example.
**FIG. 4** is an exemplary battery cell stack according to an example.
**FIG. 5a** is an exemplary battery pack in a perspective view according to an example.
**FIG. 5b** is an exemplary battery pack in a perspective view according to an example.
**FIG. 5c** is an exemplary battery pack in a perspective view according to an example.
**FIG. 6a** is an exemplary battery pack in a perspective view according to an example.
**FIG. 6b** is an exemplary battery pack in a perspective view according to an example.
**FIG. 6c** is an exemplary battery pack in a perspective view according to an example.
**FIG. 7** is an exemplary prismatic battery cell in a perspective view according to an example.
**FIG. 8** is an exemplary vapor chamber in a side view according to an example.

The drawings are schematic and may not necessarily be drawn to scale. Like reference characters throughout the drawings refer to the same or similar element unless stated otherwise. Some reference characters in some of the drawings may have been omitted for the sake of clarity.

### DETAILED DESCRIPTION

The detailed description set forth below provides information and examples of the disclosed technology with sufficient detail to enable those skilled in the art to practice the disclosure.

An aim of the present disclosure is to provide a battery cell stack assembly and/or battery pack which result in improved cooling of the prismatic battery cells of the battery cell stack while also ensuring a compact, robust and/or reliable configuration. Additionally, an aim of the present disclosure is to provide an improved battery cell stack assembly, battery pack and/or vehicle, which at least partly alleviate one or more drawbacks of the prior art, or which at least are suitable alternatives. For example, by the battery cell stack assembly as disclosed herein, heat may be efficiently transferred between the prismatic battery cells and the cooling plate member. Thereby, by way of example, fewer cooling plate members may be required for achieving efficient cooling, and/or a more compact configuration may be achieved in that adjacent battery cell stacks may be located closer to each other. Consequently, since fewer cooling plate members may be required, also fewer inlets/outlets for coolant may be required. This may imply a more space-efficient configuration, and/or fewer fluid connections, thereby reducing a risk of fluid leakage.

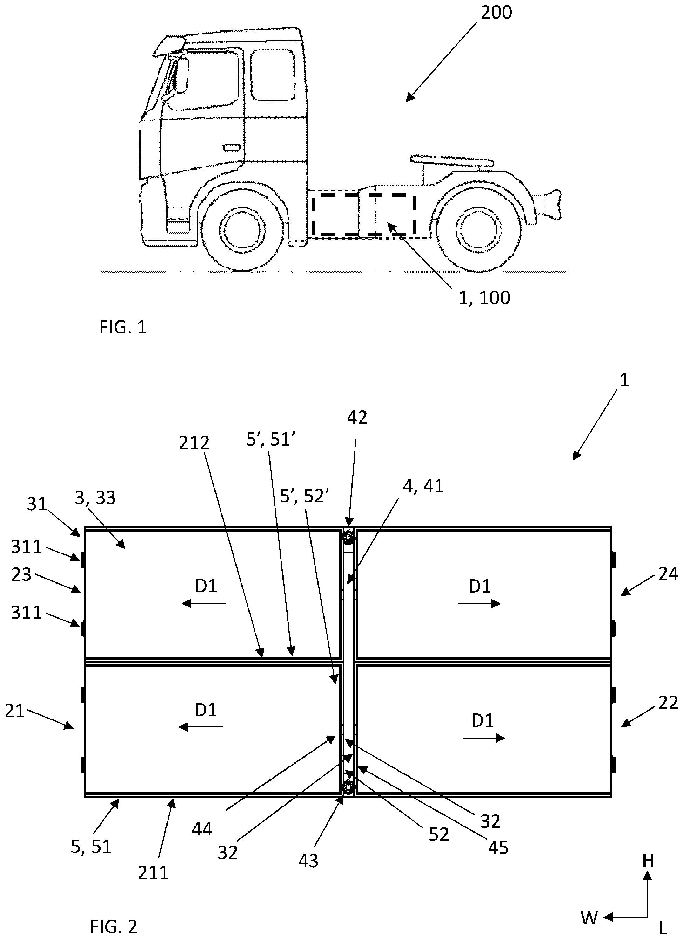

**FIG. 1** is an exemplary vehicle 200 in a side view according to an example. The vehicle 200 is in this example a truck, and more particularly a towing truck for towing one or more trailers (not shown). It shall however be noted that the vehicle may be any other type of vehicle, such as another type of truck, a bus, a passenger car, a marine vessel, or construction equipment, such as a wheel loader or an excavator. The vehicle 200 comprises a battery pack 100 according to any example disclosed herein. The battery pack 100 comprises a battery cell stack assembly 1 according to any example disclosed herein. The battery pack 100 may at least partly be used for driving one or more electric motors (not shown) of the vehicle 200. The vehicle 200 may accordingly be an electric vehicle or a hybrid vehicle, i.e., a vehicle which at least partly uses electric power for propulsion. The battery pack 100 as disclosed herein may also be used in a stationary unit, such as a building and/or any stationary machinery.

**FIG. 2** is an exemplary battery cell stack assembly 1 in a sectional view according to an example. The battery cell stack assembly 1 in FIG. 2 may for example be used in the battery pack 100 in FIG. 1.

The battery cell stack assembly 1 comprises at least one battery cell stack 21-24 comprising a plurality of prismatic battery cells 3 stacked together. The respective prismatic battery cell 3 is formed by a top surface 31 comprising at least one electrical terminal 311, a bottom surface 32, and four side surfaces 33 connecting the top surface 31 to the bottom surface 32. The plurality of prismatic battery cells 3 are stacked together along a cell stack longitudinal direction L such that the top surfaces 31 of the plurality of prismatic battery cells 3 are directed in a common direction D1 which is perpendicular to the cell stack longitudinal direction L. In the shown example, there are four battery cell stacks 21-24. However, it shall be noted that any number of battery cell stacks may be used, i.e., one or more battery cell stacks.

The battery cell stack assembly 1 further comprises a cooling plate member 4 for cooling the at least one battery cell stack 21-24.

The at least one battery cell stack 21-24 further comprises at least one vapor chamber 5 configured to transfer heat between the plurality of prismatic battery cells 3 and the cooling plate member 4.

The at least one vapor chamber 5 comprises a first heat conductive portion 51 which extends in the cell stack longitudinal direction L (which in this example is perpendicular to the sectional view) over adjacently arranged side surfaces 33 of the plurality of prismatic battery cells 3 and a second heat conductive portion 52 which extends in the cell stack longitudinal direction L over adjacently arranged bottom surfaces 32 of the plurality of prismatic battery cells 3.

The cooling plate member 4 extends in the cell stack longitudinal direction L and is provided at the adjacently arranged bottom surfaces 32 of the plurality of prismatic battery cells 3.

Further, the second heat conductive portion 52 is provided in-between the cooling plate member 4 and the adjacently arranged bottom surfaces 32 of the plurality of prismatic battery cells 3 such that heat can be transferred between the second heat conductive portion 52 and the cooling plate member 4.

As indicated in e.g. FIG. 2, the first heat conductive portion 51 may be a plate element which extends in the cell stack longitudinal direction L over the adjacently arranged side surfaces 33 of the plurality of prismatic battery cells 3. In some examples, the plate element 51 may cover at least 80 % of the respective side surface 33 is extends over. As indicated, in some examples, the plate element 51 may completely cover the respective side surface 33 is extends over.

As further indicated in FIG. 2, the second heat conductive portion 52 may be a plate element which extends in the cell stack longitudinal direction L over the adjacently arranged bottom surfaces 32 of the plurality of prismatic battery cells 3. In some examples, the plate element 52 may cover at least 30 % of the respective bottom surface 32 is extends over. As indicated, in some examples, the plate element 52 may cover substantially half of the respective bottom surface 32 is extends over. In some examples, the plate element 52 may completely cover the respective bottom surface 32 is extends over.

As further indicated in FIG. 2, the first heat conductive portion 51 may be configured to transfer heat from the respective adjacently arranged side surfaces 33 towards the second heat conductive portion 52 in a direction W along the respective side surface 33 which is perpendicular to the cell stack longitudinal direction L. The direction W is in this example referring to a width direction W, which e.g. may correspond to a width direction W of the battery pack 100 as disclosed herein. A height direction H is also depicted in FIG. 2. The height direction is perpendicular to the width direction and the longitudinal direction L. The heat transfer direction as disclosed herein may refer to a heat transfer direction as seen in a sectional plane which is perpendicular to the longitudinal direction L. This e.g. means that heat may not necessarily be transferred along a straight path, but in some examples, heat may be transferred in a non-straight path, such as in a sinus shaped path which is perpendicular to the longitudinal direction L, as seen in a sectional plane which is perpendicular to the longitudinal direction L.

The cooling plate member 4 preferably comprises a coolant path 41, and a coolant inlet 42 and a coolant outlet 43 fluidly connected to the coolant path 41.

The at least one vapor chamber 5 is preferably fluidly separated from the coolant path 41 of the cooling plate member 4.

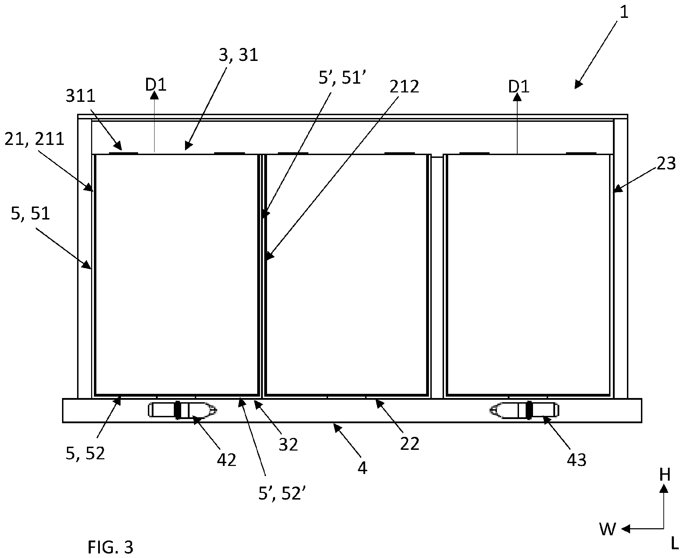

**FIG. 3** shows a battery cell stack assembly 1 according to another example. In this example, the at least one battery cell stack 21-23 is oriented differently compared to the at least one battery cell stack 21-24 in FIG. 2. Except for the different orientation and position of the battery cell stacks 21-23 in FIG. 3, the battery cell stacks 21-23 and cooling plate member 4 may be configured similarly as the battery cell stack(s) 21-24 and cooling plate member 4 in FIG. 2. In the FIG. 3 example, the cooling plate member 4 extends along the width direction and the longitudinal direction L, and in the FIG. 2 example, the cooling plate member extends in the height direction H and the longitudinal direction L. In the FIG. 3 example, the top surfaces 31 of the prismatic battery cells 3 are facing away from the battery cell stack assembly 1 in the height direction H. In the FIG. 2 example, the top surfaces 31 of the prismatic battery cells 3 are facing away from the battery cell stack assembly 1 in the width direction W.

The directions L, W, H as disclosed herein may correspond to a Cartesian coordinate system. In some examples, the height direction H may correspond to a height direction of the vehicle 200. The height direction H may in some examples be denoted a vertical direction. However, it shall be noted that the battery cell stack assembly 1 and the battery pack 100 as disclosed herein may also be oriented differently in the vehicle 200, or in any other stationary unit.

As shown in e.g. FIG. 2 and FIG. 3, the at least one battery cell stack 21-24 may comprise a first vapor chamber 5 and a second vapor chamber 5' of the at least one vapor chamber. The first heat conductive portion 51 of the first vapor chamber 5 may be provided on a first cell stack side 211 of the at least one battery cell stack 21 and the first heat conductive portion 51' of the second vapor chamber 5' may be provided on a second cell stack side 212 of the at least one battery cell stack 21, wherein the second cell stack side 212 is an opposite side to the first cell stack side 211.

With reference to FIG. 2, the battery cell stack assembly 1 may comprise a first battery cell stack 21 and a second battery cell stack 22 of the at least one battery cell stack 21-24, wherein the adjacently arranged bottom surfaces 32 of the plurality of prismatic battery cells 3 of the first battery cell stack 21 are provided on a first side 44 of the cooling plate member 4 and the adjacently arranged bottom surfaces 32 of the plurality of prismatic battery cells 3 of the second battery cell stack 22 are provided on a second side 45 of the cooling plate member 4, wherein the second side 45 is an opposite side to the first side 44.

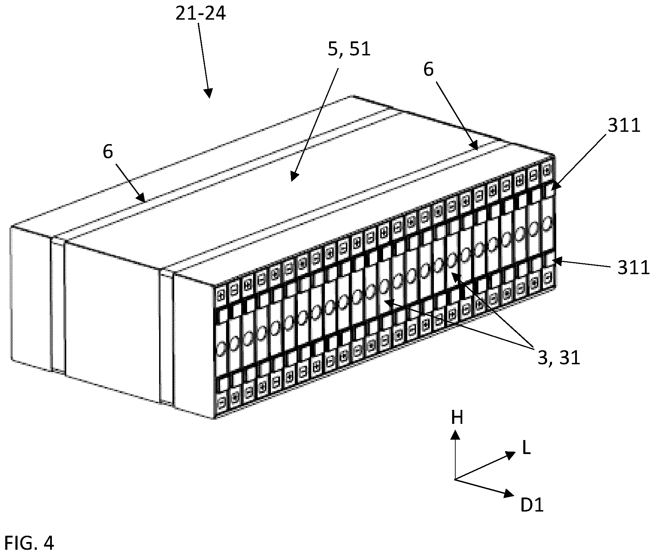

**FIG. 4** is an exemplary battery cell stack 21-24 in a perspective view according to an example. For example, the battery cell stack 21-24 in FIG. 4 may be used in the battery cell stack assemblies 1 shown in FIG. 2 and FIG. 3.

As shown in FIG. 4, the plurality of prismatic battery cells 3 may be attached to each other by at least one strap 6, in this example two straps 6, which is wrapped around the plurality of prismatic battery cells 3, and wherein the at least one vapor chamber 5 is attached to the plurality of prismatic battery cells 3 by the at least one strap 6. In this example, the at least one strap 6 is also wrapped around the at least one vapor chamber 5. The at least one strap 6 is in this example wrapped around the prismatic battery cells 3 in a wrapping direction around the common direction D 1. The at least one strap 6 is preferably a flexible element which can be bent around the prismatic battery cells 3.

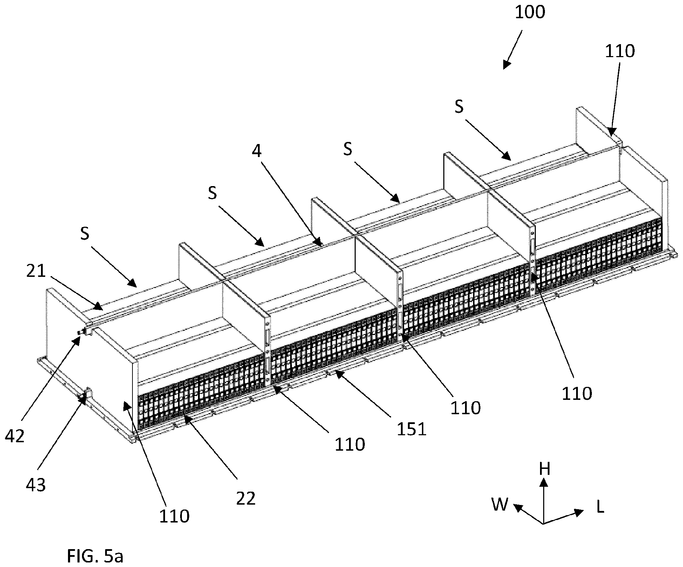

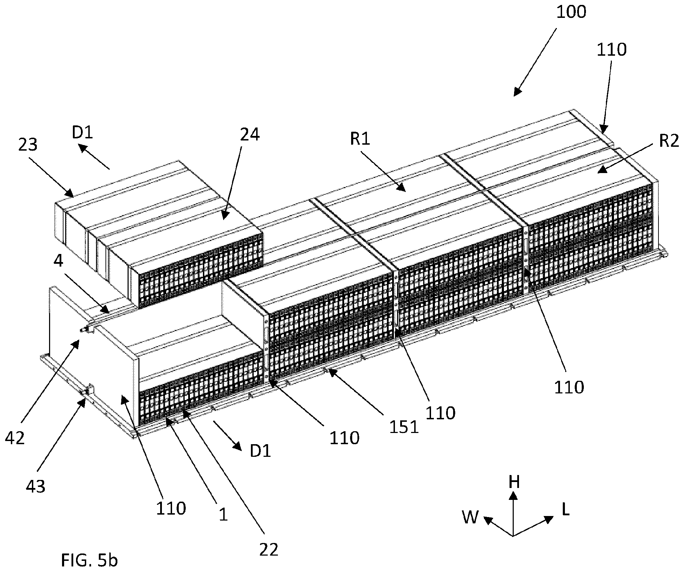

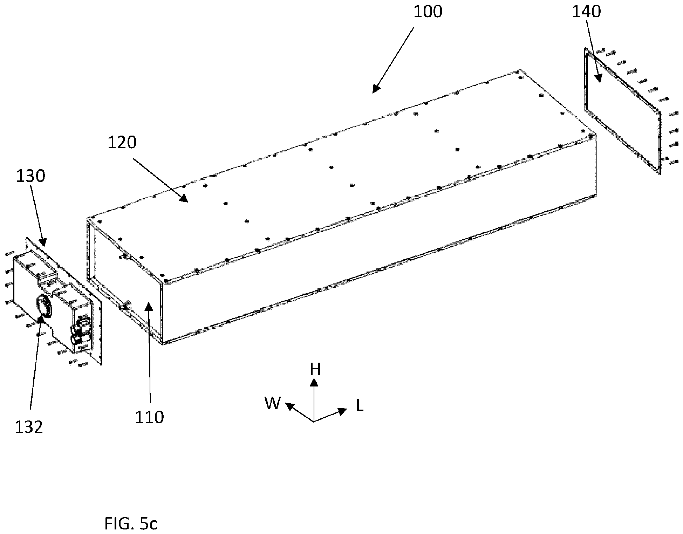

**FIG. 5a****-c** is an exemplary battery pack 100 in perspective views according to an example. FIGS. 5a-c also show an example of an assembly sequence, i.e., the battery pack 100 in FIGS. 5a-c does not necessarily show a completely finalized battery pack 100. The battery pack 100 in FIG. 5c may however show all necessary components for realizing a finalized battery pack 100.

The battery pack 100 has a longitudinal extension in a longitudinal direction L, a width extension in a width direction W and a height extension in a height direction H. The direction L, W and H may correspond to the directions L, W and H shown in FIGS. 2-4. The battery pack 100 comprises a battery cell stack assembly 1, e.g., comprising a battery cell stack such as shown in FIG. 4 and a cooling plate member 4. In the example shown in FIGS. 5a-c, the battery pack 100 is configured to accommodate sixteen battery cell stacks. The battery cell stacks may as shown be supported on a bottom support member 151 which extends in the longitudinal direction L and the width direction W. The bottom support member 151 is a load-bearing support member for the at least one battery cell stack 21-24.

As shown, the cooling plate member 4 may be an intermediate support member of the battery pack 100 with an extension in the longitudinal direction L and the height direction H.

As further shown, the cell stack longitudinal direction L of the at least one battery cell stack 21-24 may correspond to the longitudinal direction L of the battery pack 100. As further shown, the common direction D1 may extend along the width direction W of the battery pack 100.

FIGS. 5a-c further depicts that the battery pack 100 may a plurality of separate accommodation spaces S respectively arranged to receive one or more battery cell stacks 21-24 of the battery cell stack assembly 1.

The battery pack 100 may as further shown comprise one or more crossbeam members 110 with an extension in the width direction W, wherein the plurality of separate accommodation spaces S is at least partly defined by the one or more crossbeam members 110. In the shown example, the battery pack 100 comprises five crossbeam members 110, which are offset from each other in the longitudinal direction L. Any number of crossbeam members may be provided, such as two or more crossbeam members which are offset from each other in the longitudinal direction L such that accommodation spaces S are formed therebetween.

The plurality of accommodation spaces S may be arranged such that at least two rows R1, R2 of battery cell stacks 21-24 are arranged in parallel along the longitudinal direction L.

FIG. 5c depicts that the battery pack may further comprise a cover 120 for covering the battery cell stacks 21-24. The cover 120 may as shown have a U-shaped sectional profile, as seen in a sectional view which is perpendicular to the longitudinal direction L. The battery pack 100 may further comprise a first and a second end cover 130, 140 provided at outer ends of the battery pack 100, as seen with respect to the longitudinal direction L. Any one of the first and second outer covers 130, 140 may be configured with at least one opening 132 for coolant conduits, electric cables, venting arrangements, etc.

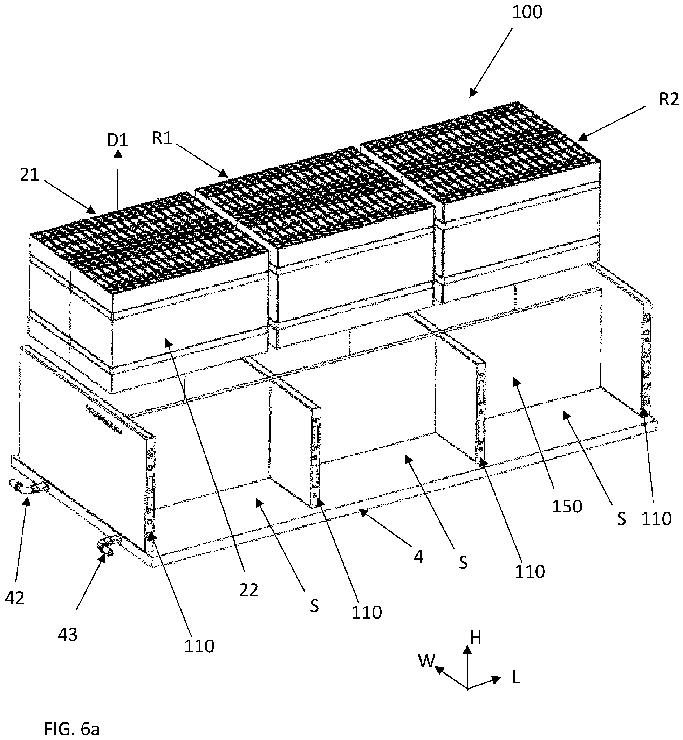

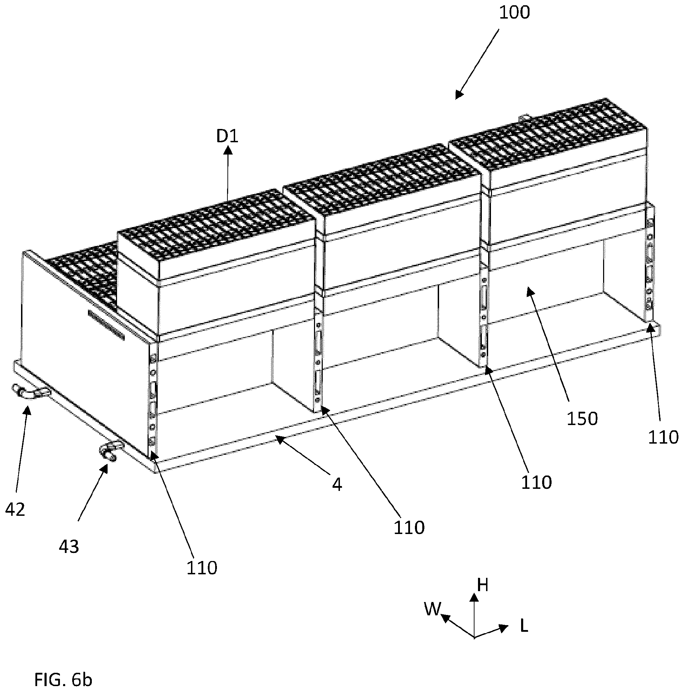

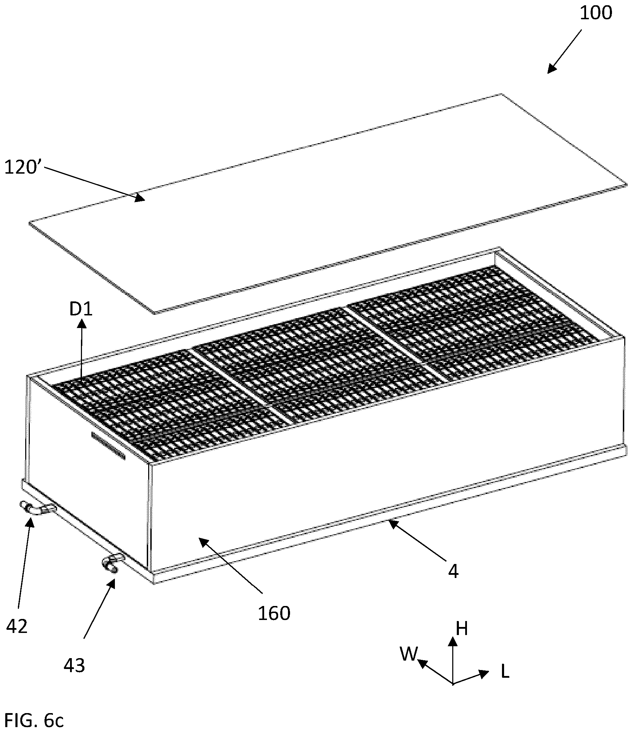

**FIG. 6a****-c** is another exemplary battery pack 100 in perspective views according to an example. FIGS. 6a-c also show an example of an assembly sequence, i.e., the battery pack 100 in FIGS. 6a-c does not necessarily show a completely finalized battery pack 100. The battery pack 100 in FIG. 6c may however show all necessary components for realizing a finalized battery pack 100.

In the battery pack 100 shown in FIGS. 6a-c, the cooling plate member 4 is a bottom support member of the battery pack 100 with an extension in the longitudinal direction L and the width direction W. The bottom support member 4 is a load-bearing support member for the at least one battery cell stack 21-24.

As further shown in FIGS. 6a-b, the common direction D1 may extend along the height direction H of the battery pack 100.

The battery pack 100 in FIGS. 6a-c may as shown also comprise a plurality of accommodation spaces S. The plurality of accommodation spaces S may be arranged such that at least two rows R1, R2 of battery cell stacks 21-24 are arranged in parallel along the longitudinal direction L. The at least two rows R1, R2 may be separated by an intermediate wall 150 which extends in the longitudinal direction L and the height direction H.

In the battery pack 100 shown in FIGS. 6a-c, six battery cell stacks are shown. However, any number of battery cell stacks may be provided in the battery pack 100.

In FIG. 6c, it is shown that the battery pack may comprise a lid (or cover) 120' for covering the battery cell stacks 21-24. In this example, the battery pack 100 further comprises a frame arrangement 160 with side walls which enclose the battery cell stacks, as seen in a sectional view which is perpendicular to the height direction H.

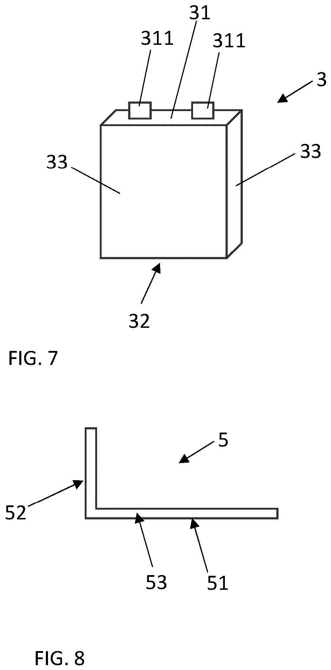

**FIG. 7** shows an exemplary prismatic battery cell 3 in schematic view according to an example. For example, the prismatic battery cell 3 in FIG. 7 may be used in any one of the battery cell stacks disclosed herein. The prismatic battery cell 3 is formed by a top surface 31 comprising at least one electrical terminal 311 (in this example two electrical terminals), a bottom surface 32, and four side surfaces 33 connecting the top surface 31 to the bottom surface 32. In some examples, the prismatic battery cell 3 may be denoted a box-shaped battery cell.

**FIG. 8** is an exemplary vapor chamber 5 in a schematic and sectional view according to an example. The sectional view is perpendicular to the herein disclosed longitudinal direction L of the battery cell stack. The vapor chamber 5 in FIG. 8 may be used in any one of the battery cell stacks disclosed herein. The vapor chamber 5 comprises a first heat conductive portion 51 which extends in the cell stack longitudinal direction L over adjacently arranged side surfaces 33 of the plurality of prismatic battery cells 3 and a second heat conductive portion 52 which extends in the cell stack longitudinal direction L over adjacently arranged bottom surfaces 32 of the plurality of prismatic battery cells 3.

The first and second heat conductive portions 51, 52 may comprise a common chamber 53 with a fluid (not shown), wherein the at least one vapor chamber 5 is arranged to transfer heat between the plurality of prismatic battery cells 3 of the at least one battery cell stack 21-24 and the cooling plate member 4 by phase transition of the fluid.

The vapor chamber 5 may hence be filled with a fluid (or coolant) that, when heated, change phase from a liquid to a gas. When heat is dissipated from the fluid, the fluid change phase from a gas to a liquid. The vaporized fluid preferably circulates via convection and moves freely through the common chamber 53. The molecules of the fluid may condense on cold surfaces in the common chamber 53, dissipate their heat load, and be channeled back to a liquid reservoir in the common chamber 53.

In the following, possible features and feature combinations of the present disclosure are presented as a list of Examples.

Example 1: A battery cell stack assembly (1), comprising:
- at least one battery cell stack (21-24) comprising a plurality of prismatic battery cells (3) stacked together, the respective prismatic battery cell being formed by a top surface (31) comprising at least one electrical terminal (311), a bottom surface (32), and four side surfaces (33) connecting the top surface (31) to the bottom surface (32), wherein the plurality of prismatic battery cells (3) are stacked together along a cell stack longitudinal direction (L) such that the top surfaces (31) of the plurality of prismatic battery cells (3) are directed in a common direction (D 1) which is perpendicular to the cell stack longitudinal direction (L),
- a cooling plate member (4) for cooling the at least one battery cell stack (21-24),
wherein
the at least one battery cell stack (21-24) further comprises at least one vapor chamber (5) configured to transfer heat between the plurality of prismatic battery cells (3) and the cooling plate member (4),
the at least one vapor chamber (5) comprises a first heat conductive portion (51) which extends in the cell stack longitudinal direction (L) over adjacently arranged side surfaces (33) of the plurality of prismatic battery cells (3) and a second heat conductive portion (52) which extends in the cell stack longitudinal direction (L) over adjacently arranged bottom surfaces (32) of the plurality of prismatic battery cells (3),
the cooling plate member (4) extends in the cell stack longitudinal direction (L) and is provided at the adjacently arranged bottom surfaces (32) of the plurality of prismatic battery cells (3), and
the second heat conductive portion (52) is provided in-between the cooling plate member (4) and the adjacently arranged bottom surfaces (32) of the plurality of prismatic battery cells (3) such that heat can be transferred between the second heat conductive portion (52) and the cooling plate member (4).

Example 2: The battery cell stack assembly (1) according to Example 1, wherein the first heat conductive portion (51) is a plate element which extends in the cell stack longitudinal direction (L) over the adjacently arranged side surfaces (33) of the plurality of prismatic battery cells (3).

Example 3: The battery cell stack assembly (1) according to any one of the preceding Examples, wherein the second heat conductive portion (52) is a plate element which extends in the cell stack longitudinal direction (L) over the adjacently arranged bottom surfaces (32) of the plurality of prismatic battery cells (3).

Example 4: The battery cell stack assembly (1) according to any one of the preceding Examples, wherein the first heat conductive portion (51) is configured to transfer heat from the respective adjacently arranged side surfaces (33) towards the second heat conductive portion (52) in a direction (W, H) along the respective side surface (33) which is perpendicular to the cell stack longitudinal direction (L).

Example 5: The battery cell stack assembly (1) according to any one of the preceding Examples, wherein the first and second heat conductive portions (51, 52) comprise a common chamber (53) with a fluid, wherein the at least one vapor chamber (5) is arranged to transfer heat between the plurality of prismatic battery cells (3) of the at least one battery cell stack (21-24) and the cooling plate member (4) by phase transition of the fluid.

Example 6: The battery cell stack assembly (1) according to any one of the preceding Examples, wherein the cooling plate member (4) comprises a coolant path (41), and a coolant inlet (42) and a coolant outlet (43) fluidly connected to the coolant path (41).

Example 7: The battery cell stack assembly (1) according to Example 6, wherein the at least one vapor chamber (5) is fluidly separated from the coolant path (41) of the cooling plate member (4).

Example 8: The battery cell stack assembly (1) according to any one of the preceding Examples, wherein the plurality of prismatic battery cells (3) are attached to each other by at least one strap (6) which is wrapped around the plurality of prismatic battery cells (3), and wherein the at least one vapor chamber (5) is attached to the plurality of prismatic battery cells (3) by the at least one strap (6).

Example 9: The battery cell stack assembly (1) according to any one of the preceding Examples, wherein the at least one battery cell stack (21-24) comprises a first vapor chamber (5) and a second vapor chamber (5') of the at least one vapor chamber, wherein the first heat conductive portion (51) of the first vapor chamber (5) is provided on a first cell stack side (211) of the at least one battery cell stack (21) and the first heat conductive portion (51') of the second vapor chamber (5') is provided on a second cell stack side (212) of the at least one battery cell stack (21), wherein the second cell stack side (212) is an opposite side to the first cell stack side (211).

Example 10: The battery cell stack assembly (1) according to any one of the preceding Examples, comprising a first battery cell stack (21) and a second battery cell stack (22) of the at least one battery cell stack (21-24), wherein the adjacently arranged bottom surfaces (32) of the plurality of prismatic battery cells (3) of the first battery cell stack (21) are provided on a first side (44) of the cooling plate member (4) and the adjacently arranged bottom surfaces (32) of the plurality of prismatic battery cells (3) of the second battery cell stack (22) are provided on a second side (45) of the cooling plate member (4), wherein the second side (45) is an opposite side to the first side (44).

Example 11: A battery pack (100), the battery pack (100) having a longitudinal extension in a longitudinal direction (L), a width extension in a width direction (W) and a height extension in a height direction (H), wherein the battery pack (100) comprises a battery cell stack assembly (1) according to any one of the preceding Examples.

Example 12: The battery pack (100) according to Example 11, wherein the cooling plate member (4) is a bottom support member of the battery pack (100) with an extension in the longitudinal direction (L) and the width direction (W), and wherein the bottom support member is a load-bearing support member for the at least one battery cell stack (21-24).

Example 13: The battery pack (100) according to Example 11, wherein the cooling plate member (4) is an intermediate support member of the battery pack (100) with an extension in the longitudinal direction (L) and the height direction (H).

Example 14: The battery pack (100) according to any one of Examples 11-13, wherein the cell stack longitudinal direction (L) of the at least one battery cell stack (21-24) corresponds to the longitudinal direction (L) of the battery pack (100).

Example 15: The battery pack (100) according to Example 14, wherein the common direction (D1) extends along the width direction (W) of the battery pack (100).

Example 16: The battery pack (100) according to Example 14, wherein the common direction (D1) extends along the height direction (H) of the battery pack (100).

Example 17: The battery pack (100) according to any one of Examples 11-16, further comprising a plurality of separate accommodation spaces (S) respectively arranged to receive one or more battery cell stacks (21-24) of the battery cell stack assembly (1).

Example 18: The battery pack (100) according to Example 17, further comprising one or more crossbeam members (110) with an extension in the width direction (W), wherein the plurality of separate accommodation spaces (S) is at least partly defined by the one or more crossbeam members (110).

Example 19: The battery pack (100) according to Example 17 or 18, wherein the plurality of accommodation spaces (S) is arranged such that at least two rows of battery cell stacks (21-24) are arranged in parallel along the longitudinal direction (L).

Example 20: A vehicle (200) comprising a battery pack (100) according to any one of Examples 11-19.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A battery cell stack assembly (1), comprising:
- at least one battery cell stack (21-24) comprising a plurality of prismatic battery cells (3) stacked together, the respective prismatic battery cell being formed by a top surface (31) comprising at least one electrical terminal (311), a bottom surface (32), and four side surfaces (33) connecting the top surface (31) to the bottom surface (32), wherein the plurality of prismatic battery cells (3) are stacked together along a cell stack longitudinal direction (L) such that the top surfaces (31) of the plurality of prismatic battery cells (3) are directed in a common direction (D 1) which is perpendicular to the cell stack longitudinal direction (L),
- a cooling plate member (4) for cooling the at least one battery cell stack (21-24),
wherein
the at least one battery cell stack (21-24) further comprises at least one vapor chamber (5) configured to transfer heat between the plurality of prismatic battery cells (3) and the cooling plate member (4),
the at least one vapor chamber (5) comprises a first heat conductive portion (51) which extends in the cell stack longitudinal direction (L) over adjacently arranged side surfaces (33) of the plurality of prismatic battery cells (3) and a second heat conductive portion (52) which extends in the cell stack longitudinal direction (L) over adjacently arranged bottom surfaces (32) of the plurality of prismatic battery cells (3),
the cooling plate member (4) extends in the cell stack longitudinal direction (L) and is provided at the adjacently arranged bottom surfaces (32) of the plurality of prismatic battery cells (3), and
the second heat conductive portion (52) is provided in-between the cooling plate member (4) and the adjacently arranged bottom surfaces (32) of the plurality of prismatic battery cells (3) such that heat can be transferred between the second heat conductive portion (52) and the cooling plate member (4).

2. The battery cell stack assembly (1) according to claim 1, wherein the first heat conductive portion (51) is a plate element which extends in the cell stack longitudinal direction (L) over the adjacently arranged side surfaces (33) of the plurality of prismatic battery cells (3).

3. The battery cell stack assembly (1) according to any one of the preceding claims, wherein the second heat conductive portion (52) is a plate element which extends in the cell stack longitudinal direction (L) over the adjacently arranged bottom surfaces (32) of the plurality of prismatic battery cells (3).

4. The battery cell stack assembly (1) according to any one of the preceding claims, wherein the first and second heat conductive portions (51, 52) comprise a common chamber (53) with a fluid, wherein the at least one vapor chamber (5) is arranged to transfer heat between the plurality of prismatic battery cells (3) of the at least one battery cell stack (21-24) and the cooling plate member (4) by phase transition of the fluid.

5. The battery cell stack assembly (1) according to any one of the preceding claims, wherein the cooling plate member (4) comprises a coolant path (41), and a coolant inlet (42) and a coolant outlet (43) fluidly connected to the coolant path (41).

6. The battery cell stack assembly (1) according to claim 5, wherein the at least one vapor chamber (5) is fluidly separated from the coolant path (41) of the cooling plate member (4).

7. The battery cell stack assembly (1) according to any one of the preceding claims, wherein the at least one battery cell stack (21-24) comprises a first vapor chamber (5) and a second vapor chamber (5') of the at least one vapor chamber, wherein the first heat conductive portion (51) of the first vapor chamber (5) is provided on a first cell stack side (211) of the at least one battery cell stack (21) and the first heat conductive portion (51') of the second vapor chamber (5') is provided on a second cell stack side (212) of the at least one battery cell stack (21), wherein the second cell stack side (212) is an opposite side to the first cell stack side (211).

8. The battery cell stack assembly (1) according to any one of the preceding claims, comprising a first battery cell stack (21) and a second battery cell stack (22) of the at least one battery cell stack (21-24), wherein the adjacently arranged bottom surfaces (32) of the plurality of prismatic battery cells (3) of the first battery cell stack (21) are provided on a first side (44) of the cooling plate member (4) and the adjacently arranged bottom surfaces (32) of the plurality of prismatic battery cells (3) of the second battery cell stack (22) are provided on a second side (45) of the cooling plate member (4), wherein the second side (45) is an opposite side to the first side (44).

9. A battery pack (100), the battery pack (100) having a longitudinal extension in a longitudinal direction (L), a width extension in a width direction (W) and a height extension in a height direction (H), wherein the battery pack (100) comprises a battery cell stack assembly (1) according to any one of the preceding claims.

10. The battery pack (100) according to claim 9, wherein the cooling plate member (4) is a bottom support member of the battery pack (100) with an extension in the longitudinal direction (L) and the width direction (W), and wherein the bottom support member is a load-bearing support member for the at least one battery cell stack (21-24).

11. The battery pack (100) according to claim 9, wherein the cooling plate member (4) is an intermediate support member of the battery pack (100) with an extension in the longitudinal direction (L) and the height direction (H).

12. The battery pack (100) according to any one of claims 9-11, wherein the cell stack longitudinal direction (L) of the at least one battery cell stack (21-24) corresponds to the longitudinal direction (L) of the battery pack (100).

13. The battery pack (100) according to claim 12, wherein the common direction (D1) extends along the width direction (W) of the battery pack (100).

14. The battery pack (100) according to claim 12, wherein the common direction (D1) extends along the height direction (H) of the battery pack (100).

15. A vehicle (200) comprising a battery pack (100) according to any one of claims 9-14.
